# EUROPÄISCHE PATENTANMELDUNG

(11) **EP 4 772 740 A1**
(43) Veröffentlichungstag der Anmeldung: **08.07.2026**
(21) Anmeldenummer: 25216812.5
(22) Anmeldetag: 19.11.2025
(51) Int. Cl.: F03D 80/50, F03D 80/70, F03D 80/80

(54) **BEFESTIGUNGSSYSTEM, WINDKRAFTANLAGE UND VERFAHREN ZUR DEMONTAGE EINES LAGERS**

(30) Priorität: 20.12.2024 DE 102024212232
(71) Anmelder: ZF Friedrichshafen AG, 88046 Friedrichshafen (DE); ZF Wind Power Antwerpen NV, 3920 Lommel (BE)
(72) Erfinder: Smook, Warren, 3040 Huldenberg (BE)
(74) Vertreter: ZF Friedrichshafen AG

(57) **Zusammenfassung**

Die Erfindung betrifft ein Befestigungssystem für ein Befestigen eines Antriebsstrangs einer Windkraftanlage (10) an einer Gondel (20) der Windkraftanlage (10). Das Befestigungssystem weist ein Rotorlagergehäuse (40), ein stationäres Bauteil und ein erstes Lager (18) auf. Das erste Lager (18) ist zum drehbaren Lagern einer Rotorwelle (16) des Antriebsstrangs in dem Rotorlagergehäuse (40) befestigt. Das Rotorlagergehäuse (40) ist weiterhin zum Befestigen an einem Maschinenbett (42) der Gondel (20) ausgebildet. Das Befestigungssystem ist zur Fixierung der Rotorwelle (16) an dem stationären Bauteil für eine Demontage des ersten Lagers (18) ausgebildet. Außerdem betrifft die Erfindung eine Windkraftanlage (10) und ein Verfahren zur Demontage eines ersten Lagers (18) von einem Rotorlagergehäuse (40) einer Windkraftanlage (10).

## Beschreibung

Die vorliegende Erfindung bezieht sich auf ein Befestigungssystem für einen Antriebsstrang einer Windkraftanlage. Zudem bezieht sich die Erfindung auf eine Windkraftanlage und ein Verfahren zur Demontage eines Lagers.

### Stand der Technik

Windkraftanlagen dienen dazu, aus Windenergie Elektrizität zu erzeugen. Zu diesem Zweck weisen Windkraftanlagen einen Rotor auf. Eine Drehgeschwindigkeit des Rotors wird von einer Rotorwelle an ein Getriebe übertragen. Die Drehgeschwindigkeit der Rotorwelle wird dabei durch das Getriebe in eine geeignete Drehzahl übersetzt, um einen Generator anzutreiben. Ein Antriebsstrang der Windkraftanlage muss in der Gondel der Windkraftanlage abgestützt werden. Diese Befestigung kann jedoch sehr komplex sein und viele Teile benötigen. Zudem können eine Wartung und ein Austausch einzelner Komponenten des Antriebsstrangs je nach Befestigungslösung sehr aufwendig sein. Beispielsweise kann es erforderlich sein, zunächst den Rotor der Windkraftanlage zu demontieren, bevor die Lager einer Rotorwelle ausgetauscht werden können. Dazu kann ein Kran erforderlich sein, was sehr aufwendig ist. Bei Windkraftanlagen im Meer muss dafür beispielsweise ein Spezialschiff gerufen werden, welches erst mit großer Verzögerung verfügbar sein kann.

### Darstellung der Erfindung

Ein erster Aspekt betrifft ein Befestigungssystem für einen Antriebsstrang einer Windkraftanlage an einer Gondel der Windkraftanlage. Die Gondel kann ein Maschinenbett aufweisen. Die Windkraftanlage kann einen Turm aufweisen, an welchem die Gondel angeordnet ist. Der Turm erstreckt sich beispielsweise mit seiner Längserstreckung in eine vertikale Richtung. Die Gondel kann beispielsweise drehbar oder drehfest an dem Turm gelagert sein. Die Gondel kann beispielsweise oberseitig an dem Turm angeordnet sein. Der Turm kann beispielsweise hohl ausgebildet sein. Der Turm kann sich zu seinem oberen Ende hin verjüngen. Der Turm kann beispielsweise aus mehreren aufeinander gestapelten Turmelementen gebildet sein. Der Turm kann beispielsweise Stahl und alternativ oder zusätzlich Beton als Werkstoff aufweisen.

Der Antriebsstrang kann eine Rotorwelle, ein Getriebe und einen Generator aufweisen. Zudem kann der Antriebsstrang oder die Windkraftanlage einen Rotor aufweisen. Die Windkraftanlage weist den Antriebsstrang auf. Teile des Antriebsstrangs können Teile des Befestigungssystems bilden. Der Rotor kann über das Getriebe den Generator antreiben, um elektrische Energie zu erzeugen. Der Rotor kann mit dem Getriebe über die Rotorwelle verbunden sein. Der Rotor kann durch die Rotorwelle an der Gondel gelagert sein. Der Rotor, das Getriebe und der Generator können an einer Gondel der Windkraftanlage befestigt sein, beispielsweise gemeinsam durch eine Hauptlagerung. Der Rotor kann beispielsweise eine horizontale oder eine vertikale Drehachse aufweisen. Der Rotor kann beispielsweise zwei, drei, vier oder mehr Rotorblätter aufweisen, welche über eine Nabe mit der Rotorwelle verbunden sind. Der Antriebsstrang kann optional auch eine Bremse aufweisen.

Das Befestigungssystem weist ein Rotorlagergehäuse auf. In dem Rotorlagergehäuse ist wenigstens ein erstes Lager zum drehbaren Lagern der Rotorwelle des Antriebsstrangs befestigt. In dem Rotorlagergehäuse kann auch ein zweites Lager zum drehbaren Lagern der Rotorwelle angeordnet sein. Sofern nur das erste Lager vorgesehen ist, kann die Rotorwelle über ein weiteres Lager in einer anderen Komponente des Antriebsstrangs gelagert sein, wie in einem Getriebegehäuse oder einem Generatorgehäuse. Dieses Lager kann ebenso als zweites Lager bezeichnet werden. Sofern zwei Lager in dem Rotorlagergehäuse vorgesehen sind, kann das Befestigungssystem und auch der Antriebsstrang frei von weiteren Lagern für die Rotorwelle in anderen Komponenten des Antriebsstrangs sein. Die Lager können beispielsweise als Wälzlager ausgebildet sein. Geeignete Lager sind beispielsweise Kegelrollenlager. Die Lager können einen Außenring und einen Innenring sowie radial dazwischen angeordnete Wälzkörper aufweisen. Der Innenring zumindest des ersten Lagers kann auf der Rotorwelle sitzen. Der Außenring zumindest des ersten Lagers kann in einem Sitz an dem Rotorwellengehäuse innenseitig befestigt sein. Der Innenring und alternativ oder zusätzlich der Außenring können durch eine Presspassung befestigt sein. Alternativ oder zusätzlich kann eine axiale Sicherung, beispielsweise mit einem Klemmelement, zum Befestigen der jeweiligen Ringe vorgesehen sein. Das Rotorlagergehäuse kann beispielsweise ein Gussteil oder Schmiedeteil sein. Das Rotorlagergehäuse kann einstückig oder mehrteilig ausgebildet sein.

Das Rotorlagergehäuse ist zum Befestigen an dem Maschinenbett der Gondel ausgebildet. Das Maschinenbett kann beispielsweise ein Schmiedeteil oder Gussteil sein. Das Maschinenbett kann Schnittstellen zur Befestigung des Antriebsstrangs aufweisen, wie beispielsweise Auflageflächen für das Rotorlagergehäuse. Das Rotorlagergehäuse kann ein zu dem Maschinenbett separates Bauteil sein oder einstückig mit dem Maschinenbett ausgebildet sein. Das Rotorlagergehäuse kann mit dem Maschinenbett beispielsweise verschraubt oder vernietet sein.

Das Rotorlagergehäuse und das erste Lager sowie das optionale zweite Lager in dem Rotorlagergehäuse können eine Hauptlagerung des Antriebsstrangs ausbilden. Die Windkraftanlage kann frei von weiteren Lagern sein, über welche der Antriebsstrang an dem Maschinenbett und insgesamt der Gondel der Windkraftanlage abstützbar ist. Die Hauptlagerung kann frei von weiteren Lagern sein. Die Rotorwelle kann nur über die Hauptlagerung an der Gondel gelagert sein. Das Getriebe kann beispielsweise ebenfalls nur über die Hauptlagerung an der Gondel gelagert sein. Dann sind beispielsweise stationäre Bauteile des Gehäuses, wie ein Getriebegehäuse, an dem Rotorlagergehäuse befestigt. Das Getriebe kann aber zusätzlich noch an dem Maschinenbett abgestützt sein, beispielsweise über ein Feder-Dämpfer-System oder eine Verschraubung des Getriebegehäuses mit dem Maschinenbett. Ein drehbares Teil des Getriebes, wie eine Eingangswelle des Getriebes, kann über die Rotorwelle an den beiden Lagern gelagert sein. Optional kann auch der Generator nur über die Hauptlagerung an der Gondel gelagert sein. Alternativ kann der Generator noch zusätzlich an dem Maschinenbett abgestützt sein, beispielsweise über ein Feder-Dämpfer-System oder eine Verschraubung des Getriebegehäuses mit dem Maschinenbett.

Das erste Lager kann axial in einem rotorseitigen Endbereich des Rotorlagergehäuse angeordnet sein. Das erste Lager bildet beispielsweise ein rotorseitiges Lager. Das zweite Lager kann axial in einem generatorseitigen Endbereich des Rotorlagergehäuse angeordnet sein. Das zweite Lager bildet beispielsweise ein generatorseitiges Lager. Die beiden Lager können axial zueinander beabstandet sein. Die beiden Lager können koaxial angeordnet sein. In dem Axialbereich, in welchem die beiden Lager angeordnet sind, kann das Gehäuse jeweils verdickt und alternativ oder zusätzlich versteift ausgebildet sein. Das Gehäuse kann einen geschlossenen umlaufenden Ringbereich in dem Axialbereich aufweisen, in welchem die beiden Lager jeweils angeordnet sind. Die axiale Richtung, eine radiale Richtung und eine Umfangsrichtung kann durch die Drehachse der Rotorwelle und alternativ oder zusätzlich durch die Drehachse der jeweiligen Lager definiert sein.

Das Getriebe kann eine Eingangswelle und eine Ausgangswelle aufweisen. Das Getriebe kann ein Getriebegehäuse aufweisen. Der Generator kann einen Stator und einen Läufer aufweisen. Der Generator kann ein Generatorgehäuse aufweisen. Die Eingangswelle des Getriebes kann mit der Rotorwelle verbunden sein. Die Ausgangswelle des Getriebes kann mit dem Läufer des Generators verbunden sein. Das Generatorgehäuse kann den Stator ausbilden oder der Stator kann in dem Generatorgehäuse befestigt sein. Das Getriebe kann einen Planetenradsatz aufweisen. Beispielsweise kann ein Planetenträger die Eingangswelle ausbilden. Beispielsweise kann ein Sonnenrad die Ausgangswelle ausbilden. Beispielsweise kann ein Hohlrad in dem Getriebegehäuse befestigt sein oder das Getriebegehäuse ausbilden.

Das Befestigungssystem weist ein stationäres Bauteil auf. Das Befestigungssystem ist dazu ausgebildet, dass für eine Demontage des ersten Lagers die Rotorwelle an dem stationären Bauteil fixierbar ist. Dafür können Fixiermittel vorgesehen sein, wie Durchgangsöffnungen oder Sacklochbohrungen mit Innengewinde in dem stationären Bauteil und der Rotorwelle oder eine Klemmvorrichtung. Das stationäre Bauteil kann ein unbewegliches Bauteil sein, welches auch ohne das erste Lager noch die über das erste Lager und optional zweite Lager an dem Rotorlagergehäuse abgestützte Lasten tragen kann. Beispielsweise kann das stationäre Bauteil das Maschinenbett, das Rotorlagergehäuse oder ein anderes lasttragendes Bauteil der Gondel sein. Beispielsweise kann die Rotorwelle temporär mit Befestigungsmitteln, beispielsweise ausgebildet als Schrauben, an dem Maschinenbett oder dem Rotorlagergehäuse gesichert werden. Die Rotorwelle ist dann beispielsweise nicht mehr drehbar gelagert. Der Antriebsstrang ist dann beispielsweise nicht mehr betriebsfähig. Die Verbindung der Rotorwelle zu dem stationären Bauteil kann beispielsweise dazu ausgebildet sein, allen Lasten zu widerstehen, welche im Stillstand der Windkraftanlage auf das erste Lager wirken oder wirken können. Die Fixierung kann im montierten Zustand des Antriebsstrangs zugänglich sein. Beispielsweise kann die Rotorwelle direkt oder über die Nabe an einem Flansch des Rotorlagergehäuses angeschraubt werden. Die Demontage des ersten Lagers kann ein Entfernen des ersten Lagers aus dessen Lagersitz bedeuten. Die Demontage des ersten Lagers kann ein Entfernen von wenigstens einem Teil oder des gesamten ersten Lagers aus dem Rotorlagergehäuse bedeuten. Dadurch kann das erste Lager ausgetauscht und/oder gewartet werden. Das erste Lager kann bei dessen Demontage zerlegt werden oder in einem betriebsbereiten Zustand verbleiben.

Für die Demontage des ersten Lagers kann so zunächst die Rotorwelle gesichert werden. Dann kann das erste Lager aus dem Rotorlagergehäuse entnommen werden, ohne dass beispielsweise der Rotor demontiert werden muss. Der Rotor und auch andere Teile des Antriebsstrangs können dann weiter über das Rotorlagergehäuse an dem Maschinenbett abgestützt werden. Zur Demontage des ersten Lagers kann eine Demontage des Getriebes und alternativ oder zusätzlich des Generators notwendig sein. Das Befestigungssystem kann aber auch dazu ausgebildet sein, dass das erste Lager durch das Getriebe und alternativ oder zusätzlich den Generator zur Demontage durchgeschoben werden kann.

In einer Ausführungsform des Befestigungssystems kann es vorgesehen sein, dass das stationäre Bauteil durch das Rotorlagergehäuse gebildet ist. Die Fixierung der Rotorwelle an dem Rotorlagergehäuse kann sehr einfach sein, da die Rotorwelle bereits benachbart zu dem Rotorlagergehäuse angeordnet ist. Zudem kann das Rotorlagergehäuse grundsätzlich dazu ausgebildet sein, die an dem ersten Lager wirkenden Lasten aufzunehmen, sodass im Vergleich zu einer Bauweise ohne die Möglichkeit zur Fixierung der Rotorwelle für die Montage des ersten Lagers keine Verstärkung notwendig ist. Die Rotorwelle und das Rotorlagergehäuse können axial benachbarte und sich radial erstreckende Flansche ausbilden, an welchen diese aneinander für die Demontage des ersten Lagers befestigbar sind.

In einer Ausführungsform des Befestigungssystems kann es vorgesehen sein, dass das Rotorlagergehäuse eine Zugangsöffnung aufweist. Die Zugangsöffnung kann an einem dem Rotor der Windkraftanlage abgewandten Ende ausgebildet sein. Beispielsweise kann die Zugangsöffnung an einer Stirnseite des Rotorlagergehäuses ausgebildet sein. Die Zugangsöffnung kann dem Getriebe und alternativ oder zusätzlich dem Generator zugewandt sein. Durch die Zugangsöffnung kann das erste Lager bei der Demontage entnehmbar sein. Beispielsweise kann das erste Lager axial aus dem Rotorlagergehäuse durch die Zugangsöffnung herausgezogen werden.

Die Zugangsöffnung kann eine axiale Durchgangsöffnung in dem Rotorlagergehäuse sein. Die Zugangsöffnung kann durch einen Deckel verschlossen sein. Der Deckel kann zur Demontage des ersten Lagers entfernbar sein. Der Deckel kann einen Teil des Rotorlagergehäuses bilden oder dazu separat sein. Der Deckel kann angeschraubt sein. Der Deckel kann ein Verbindungsteil bilden, an welchem der Generator und alternativ oder zusätzlich das Getriebe mit dem Rotorlagergehäuse befestigt sind. In dem Deckel kann das zweite Lager befestigt sein. Durch das Abnehmen des Deckels oder zumindest bei dem Abnehmen des Deckels kann das zweite Lager demontiert werden. Das zweite Lager kann beispielsweise erst demontierbar sein, wenn die Rotorwelle an dem stationären Bauteil fixiert ist. Es kann erforderlich sein, das zweite Lager zu demontieren, bevor das erste Lager aus der Zugangsöffnung entnommen werden kann. Bei der Demontage eines der Lager kann dieses wenigstens von seinem Sitz gelöst werden. Bei der Demontage kann wenigstens ein Außenring des jeweiligen Lagers gelöst werden. Bei der Demontage eines der Lager kann auch ein Zerlegen des Lagers durch ein Lösen des Außenrings von einem Innenring des Lagers erfolgen.

In einer Ausführungsform des Befestigungssystems kann es, wie bereits beschrieben, vorgesehen sein, dass das Befestigungssystem das zweite Lager aufweist. Das zweite Lager kann auf einer dem Rotor abgewandten Seite neben dem ersten Lager angeordnet sein, beispielsweise axial beabstandet zu dem ersten Lager. Das zweite Lager kann auf der Rotorwelle sitzen. Das zweite Lager kann ebenfalls durch die Zugangsöffnung zu dessen Demontage entnehmbar sein. Das Entnehmen kann dabei mit dem Freigeben der Zugangsöffnung durch Abnehmen des Deckels erfolgen.

In einer Ausführungsform des Befestigungssystems kann es vorgesehen sein, dass sich ein radialer Freiraum zwischen der Rotorwelle und dem Rotorlagergehäuses in einer Axialrichtung hin zu dem von dem Rotor abgewandten Ende aufweitet. Ein Platz zwischen einer Außenseite der Rotorwelle und einer Innenseite des Rotorlagergehäuse kann in die Axialrichtung weg von dem Rotor und alternativ oder zusätzlich hin zu der Zugangsöffnung zunehmen. Dadurch kann ein Demontieren des ersten Lagers erleichtert werden. Beispielsweise kann das erste Lager so einfach entlang der Rotorwelle in Richtung zu der Zugangsöffnung verschoben werden. Der radiale Freiraum zwischen der Rotorwelle und dem Rotorlagergehäuse kann ab dem Sitz des ersten Lagers bis zu der Zugangsöffnung monoton zunehmen. Der radiale Freiraum zwischen der Rotorwelle und dem Rotorlagergehäuse nimmt beispielsweise in keinem Axialbereich ab dem Sitz des ersten Lagers axial hin zu der Zugangsöffnung ab. Der radiale Freiraum zwischen der Rotorwelle und dem Rotorlagergehäuse kann sich kontinuierlich, beispielsweise konisch, oder auch stufenweise aufweiten.

Beispielsweise kann der radiale Freiraum zwischen der Rotorwelle und dem Rotorlagergehäuse dadurch zunehmen, dass sich ein Innendurchmesser des Rotorlagergehäuses in der Axialrichtung hin zu dem von dem Rotor abgewandten Ende des Rotorlagergehäuses aufweitet. Der Innendurchmesser kann aufgrund der Aufweitung größer werden. Der Innendurchmesser kann sich hin zu der Zugangsöffnung ab einem Sitz des ersten Lagers aufweiten. Der Innendurchmesser kann ab dem Sitz des ersten Lagers bis zu der Zugangsöffnung monoton zunehmen. Der Innendurchmesser nimmt beispielsweise in keinem Axialbereich ab dem Sitz des ersten Lagers axial hin zu der Zugangsöffnung ab. Der Innendurchmesser kann sich kontinuierlich, beispielsweise konisch, oder auch stufenweise aufweiten. Das Rotorlagergehäuse kann aber zwischen dem Sitz des ersten Lagers und der Zugangsöffnung auch einen konstanten Innendurchmesser aufweisen.

Alternativ oder zusätzlich kann der radiale Freiraum zwischen der Rotorwelle und dem Rotorlagergehäuse dadurch zunehmen, dass sich ein Außendurchmesser der Rotorwelle in der Axialrichtung hin zu dem von dem Rotor abgewandten Ende des Rotorlagergehäuses verjüngt. Der Außendurchmesser kann aufgrund der Verjüngung kleiner werden. Der Außendurchmesser kann sich hin zu der Zugangsöffnung ab dem Sitz des ersten Lagers verjüngen. Der Außendurchmesser kann ab dem Sitz des ersten Lagers bis zu der Zugangsöffnung monoton abnehmen. Der Außendurchmesser nimmt beispielsweise in keinem Axialbereich ab dem Sitz des ersten Lagers axial hin zu der Zugangsöffnung zu. Der Außendurchmesser kann sich kontinuierlich, beispielsweise konisch, oder auch stufenweise verjüngen. Die Rotorwelle kann aber zwischen dem Sitz des ersten Lagers und der Zugangsöffnung auch einen konstanten Außendurchmesser aufweisen.

In einer Ausführungsform des Befestigungssystems kann es vorgesehen sein, dass das Befestigungssystem einen Schlitten aufweist. Der Schlitten kann in dem Rotorlagergehäuse befestigbar sein. Beispielsweise kann der Schlitten eine Führungsschiene aufweisen, welche an dem Rotorlagergehäuse befestigbar ist, beispielsweise mit einer Verschraubung. Der Schlitten kann beispielsweise nur nach Freigeben der Zugangsöffnung und alternativ oder zusätzlich dem Demontieren des zweiten Lagers befestigbar sein. Bei einem befestigten Schlitten kann die Windkraftanlage nicht betriebsfähig sein. Mittels des Schlittens kann das erste Lager bei der Demontage aus dem Rotorlagergehäuse führbar sein. Der Schlitten kann einen Wagen aufweisen, welcher beispielsweise translatorisch in Axialrichtung beweglich an der Führungsschiene gehalten ist. An dem Schlitten, beispielsweise dessen Wagen, kann das erste Lager befestigbar sein. Der Schlitten kann das erste Lager halten, wenn dieses zur Demontage axial durch das Rotorlagergehäuse bewegt wird. Der Schlitten kann beispielsweise nur den Außenring des ersten Lagers oder auch das komplette erste Lager halten. Der Schlitten kann auch zunächst zur Demontage des Außenrings des ersten Lagers aus dem Rotorlagergehäuse genutzt werden und dann zur Demontage des restlichen ersten Lagers. Der Schlitten kann einen Antrieb aufweisen. Der Antrieb des Schlittens kann auch durch die Windkraftanlage bereitgestellt werden. Vorzugsweise ist der Schlitten mit einer Motorbetriebenen Vorrichtung, beispielsweise mit einem in der Gondel der Windkraftanlage installierten Kran verbindbar, um den Schlitten anzutreiben. Beispielsweise kann der Schlitten oder zumindest das Befestigungssystem dafür eine oder mehrere Umlenkrollen aufweisen. Dadurch kann das erste Lager auch bei einer Neigung der Drehachse der Rotorwelle zu einer Horizontalen kontrolliert bewegt werden. Durch den Schlitten können auch die extrem schweren ersten Lager von großen Windkraftanlagen demontiert werden, welche beispielsweise mehrere Tonnen wiegen können. Zudem kann der Schlitten die Demontage erleichtern, wenn ein Innenraum in dem Rotorlagergehäuse zu beengt ist, sodass beispielsweise kein Monteur zu dem ersten Lager gelangen kann. Das zweite Lager kann beispielsweise direkt an dem dem Rotor abgewandten Endbereich des Rotorlagergehäuses angeordnet sein und so auch ohne den Schlitten demontiert werden. Das zweite Lager kann bei der Demontage aber auch von dem Schlitten geführt werden, beispielsweise zu einem Ablageort beabstandet von dem Rotorlagergehäuse.

In einer Ausführungsform des Befestigungssystems kann es vorgesehen sein, dass das Befestigungssystem dafür ausgebildet ist, einen Außenring des ersten Lagers mittels einer Schraube aus dessen Sitz in dem Rotorlagergehäuse zu lösen. Die Schraube kann auf den Außenring zu dessen Lösen aus einem Sitz in dem Rotorlagergehäuse eine Axialkraft ausüben. Die Axialkraft kann beispielsweise ausgeübt werden, indem die Schraube in einem Gewinde gedreht wird oder eine Mutter auf der Schraube gedreht wird. Die Schraube kann dagegen beispielsweise nicht dazu dienen, den Außenring an dem Rotorlagergehäuse zu fixieren. Im betriebsbereiten Zustand der Windkraftanlage ist die Schraube beispielsweise nicht in dem Rotorlagergehäuse angeordnet. Das Befestigungssystem kann einen Werkzeugsatz zum Lösen des Außenrings des ersten Lagers aus dessen Sitz aufweisen, welcher die Schraube aufweist. Beispielsweise kann ein Klemmelement, welches den Außenring axial an dem Rotorlagergehäuse fixiert, zur Demontage gelöst und gegen ein Widerlagerelement getauscht werden. Die Schraube wird durch eine Durchgangsöffnung an dem Widerlagerelement geführt und mit dem Außenring verschraubt. Durch ein weiteres Schrauben, beispielsweise einer Mutter, wird der Außenring dann axial aus seinem Sitz gezogen. Anschließend kann ein Zugelement, wie ein Haken, an dem gleichen Widerlagerelement oder einem weiteren Widerlagerelement, welches dann eingesetzt wird, eingeführt werden und den Innenring und alternativ oder zusätzlich Wälzkörper des ersten Lagers aus dem Sitz an der Rotorwelle ziehen. Alternativ kann der Außenring eine Durchgangsöffnung mit Innengewinde aufweisen. Darin kann die Schraube eingeschraubt werden und sich dann an deren Spitze an einem Absatz des Rotorlagergehäuses abstützen. Dadurch kann dann ebenfalls der Außenring axial aus dessen Sitz gedrückt werden.

Alternativ oder zusätzlich kann der Außenring des ersten Lagers mit seinem Außenumfang nur in einem Teilbereich an dem Rotorlagergehäuse anliegen. Beispielsweise erstreckt sich eine Anlagefläche des Außenrings nur über einen Teil der axialen Erstreckung des Außenrings. Dann kann der Außenring des ersten Lagers mit geringem Kraftaufwand aus dem Sitz in dem Rotorlagergehäuse gelöst werden.

In einer Ausführungsform des Befestigungssystems kann es vorgesehen sein, dass das Rotorlagergehäuse wenigstens eine Durchgangsöffnung in einer umlaufenden Wand aufweist, durch welche das erste Lager für die Demontage zugänglich ist. Die Durchgangsöffnung kann sich radial durch das Rotorlagergehäuse erstrecken. Die Durchgangsöffnung kann axial benachbart zu dem ersten Lager angeordnet sein. Dadurch kann das erste Lager für dessen Demontage einfach zugänglich sein. Beispielsweise kann durch die Durchgangsöffnung die Schraube zum Lösen des Außenrings aus dessen Sitz in dem Rotorlagergehäuse eingeführt werden. Zudem kann eine Befestigung des ersten Lagers durch die Durchgangsöffnung von außerhalb des Rotorlagergehäuses gelöst werden. Auch eine Befestigung des Schlittens an dem Rotorlagergehäuse und alternativ oder zusätzlich dem ersten Lager kann durch die Durchgangsöffnung möglich sein. Es können mehrere in Umfangsrichtung und alternativ oder zusätzlich axial beabstandete Durchgangsöffnungen vorgesehen sein. Es können auch Durchgangsöffnungen benachbart zu dem zweiten Lager für dessen Demontage vorgesehen sein. Die Durchgangsöffnungen können im Betrieb durch eine Verschlusskappe verschlossen sein. Alternativ oder zusätzlich können die Lager beispielsweise auch abgedichtet sein.

Ein zweiter Aspekt betrifft eine Windkraftanlage, welche das Befestigungssystem gemäß dem ersten Aspekt aufweist. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden. Die Windkraftanlage weist die Gondel auf. Die Gondel weist das Maschinenbett auf. Die Windkraftanlage weist die Rotorwelle auf, optional mit dem daran befestigten Rotor. Die Windkraftanlage kann den Turm aufweisen. Das Rotorlagergehäuse ist an dem Maschinenbett befestigt. Die Rotorwelle ist in dem Rotorlagergehäuse mit dem ersten Lager drehbar gelagert. Die Rotorwelle ist an einem stationären Bauteil für die Demontage des ersten Lagers fixierbar. Das Getriebe kann über das Rotorlagergehäuse an dem Maschinenbett befestigt sein. Der Generator kann über das Rotorlagergehäuse an dem Maschinenbett befestigt sein. Das Rotorlagergehäuse und das Maschinenbett können als separate Bauteile ausgebildet sein.

Ein dritter Aspekt betrifft ein Verfahren zur Demontage eines ersten Lagers von einem Rotorlagergehäuse einer Windkraftanlage. Das Verfahren kann zur Demontage des ersten Lagers bei der Windkraftanlage gemäß dem zweiten Aspekt und alternativ oder zusätzlich bei dem Befestigungssystem gemäß dem ersten Aspekt genutzt werden. Jeweilige Vorteile und weitere Merkmale sind der Beschreibung des ersten und zweiten Aspekts zu entnehmen, wobei Ausgestaltungen des ersten bzw. zweiten Aspekts auch Ausgestaltungen des dritten Aspekts und umgekehrt bilden.

Das Rotorlagergehäuse ist bei dem Verfahren an einem Maschinenbett in einer Gondel der Windkraftanlage befestigt. Das erste Lager ist in dem Rotorlagergehäuse befestigt, beispielsweise zumindest zu Beginn des Verfahrens. Eine Rotorwelle der Windkraftanlage ist mit dem ersten Lager drehbar an dem Rotorlagergehäuse gelagert, beispielsweise zumindest zu Beginn des Verfahrens.

Das Verfahren weist einen Schritt eines Fixierens der Rotorwelle an einem stationären Bauteil auf. Dafür wird die Rotorwelle beispielsweise mit dem Rotorlagergehäuse als stationäres Bauteil verschraubt. Das Verfahren weist einen Schritt eines Lösens der Befestigung des ersten Lagers nach der Fixierung der Rotorwelle auf. Dann kann das erste Lager aus dem Rotorlagergehäuse entnommen werden, beispielsweise durch axiales Verschieben durch die Zugangsöffnung. Das Lösen kann ein Lösen des ersten Lagers von dem Rotorlagergehäuse und alternativ oder zusätzlich der Rotorwelle aufweisen. Das Lösen des ersten Lagers von dem Rotorlagergehäuse und von der Rotorwelle kann simultan oder nacheinander erfolgen. Beispielsweise wird zunächst der Außenring von seinem Sitz in dem Rotorlagergehäuse gelöst. Anschließend wird erst der Innenring von seinem Sitz an der Rotorwelle gelöst. Das Verfahren kann einen Schritt eines Lösens und alternativ oder zusätzlich eines Wegbewegens des Getriebes von dem Rotorlagergehäuse aufweisen. Das Verfahren kann einen Schritt eines Lösens und alternativ oder zusätzlich eines Wegbewegens des Generators von dem Getriebe und alternativ oder zusätzlich dem Rotorlagergehäuse aufweisen. Der Generator kann gemeinsam mit dem Getriebe gelöst und wegbewegt werden- Das Verfahren kann einen Schritt eines Öffnens der Zugangsöffnung in dem Rotorlagergehäuse aufweisen. Das Verfahren kann einen Schritt eines Lösens und alternativ oder zusätzlich eines Entfernens des zweiten Lagers, beispielsweise aus dem Rotorlagergehäuse, aufweisen. Das Verfahren kann einen Schritt eines Montierens des Schlittens aufweisen. Das Verfahren kann einen Schritt eines Befestigens des ersten Lagers an dem Wagen des Schlittens aufweisen. Das Verfahren kann einen Schritt eines Entfernens des ersten Lagers aus dem Rotorlagergehäuse aufweisen, beispielsweise mittels des Schlittens.

### Kurze Beschreibung der Figuren

Fig. 1 veranschaulicht schematisch eine Windkraftanlage mit einem Antriebsstrang.
Fig. 2 veranschaulicht schematisch in einer Schnittansicht eine erste Ausführungsform eines Befestigungssystems des Antriebsstrangs für die Windkraftanlage von Fig. 1 in einem betriebsbereiten Zustand der Windkraftanlage.
Fig. 3 veranschaulicht schematisch in einer Schnittansicht eine Demontage von Lagern für eine Rotorwelle bei dem Befestigungssystem gemäß Fig. 2.
Fig. 4 veranschaulicht schematisch in einer Schnittansicht eine zweite Ausführungsform des Befestigungssystems des Antriebsstrangs für die Windkraftanlage von Fig. 1 in einem betriebsbereiten Zustand der Windkraftanlage.
Fig. 5 veranschaulicht schematisch in einer Schnittansicht eine Demontage von Lagern für eine Rotorwelle bei dem Befestigungssystem gemäß Fig. 4.
Fig. 6 veranschaulicht schematisch in einer Schnittansicht eine dritte Ausführungsform des Befestigungssystems des Antriebsstrangs für die Windkraftanlage von Fig. 1 in einem betriebsbereiten Zustand der Windkraftanlage.
Fig. 7 veranschaulicht schematisch in einer Schnittansicht eine vierte Ausführungsform des Befestigungssystems des Antriebsstrangs für die Windkraftanlage von Fig. 1 in einem betriebsbereiten Zustand der Windkraftanlage.
Fig. 8 veranschaulicht schematisch in einer Schnittansicht eine erste Gestaltung eines Rotorlagergehäuses bei den verschiedenen Ausführungsformen des Befestigungssystems.
Fig. 9 veranschaulicht schematisch in einer Schnittansicht eine zweite Gestaltung des Rotorlagergehäuses bei den verschiedenen Ausführungsformen des Befestigungssystems.
Fig. 10 veranschaulicht schematisch eine erste Variante zum Lösen eines Außenrings eines Lagers mittels einer Schraube aus dessen Sitz in dem Rotorlagergehäuse bei den verschiedenen Ausführungsformen des Befestigungssystems.
Fig. 11 veranschaulicht schematisch eine zweite Variante zum Lösen des Außenrings des Lagers mittels der Schraube aus dessen Sitz in dem Rotorlagergehäuse bei den verschiedenen Ausführungsformen des Befestigungssystems.
Fig. 12 veranschaulicht schematisch eine weitere Gestaltung des Sitzes des Außenrings des Lagers in dem Rotorlagergehäuse bei den verschiedenen Ausführungsformen des Befestigungssystems.
Fig. 13 veranschaulicht schematisch in einer Seitenansicht eine erste Gestaltung des Rotorlagergehäuses bei den verschiedenen Ausführungsformen des Befestigungssystems, welches wenigstens eine Durchgangsöffnung in einer umlaufenden Wand aufweist.
Fig. 14 veranschaulicht schematisch in einer Seitenansicht eine zweite Gestaltung der Durchgangsöffnungen in der umlaufenden Wand des Rotorlagergehäuses bei den verschiedenen Ausführungsformen des Befestigungssystems.
Fig. 15 veranschaulicht schematisch in einer Draufsicht eine dritte Gestaltung der Durchgangsöffnungen in der umlaufenden Wand des Rotorlagergehäuses bei den verschiedenen Ausführungsformen des Befestigungssystems.
Fig. 16 veranschaulicht schematisch in einer Seitenansicht einen Schlitten des Befestigungssystems, welcher in dem Rotorlagergehäuse im nicht betriebsbereiten Zustand der Windkraftanlage zur Demontage des ersten Lagers befestigt ist und mittels welchem das erste Lager bei der Demontage aus dem Rotorlagergehäuse führbar ist.
Fig. 17 veranschaulicht schematisch in einer Schnittansicht den Schlitten des Befestigungssystems.
Fig. 18 veranschaulicht schematisch in einer Seitenansicht den Schlitten des Befestigungssystems, wobei das Lager nun mittels des Schlittens hin zu einer Zugangsöffnung in dem Rotorlagergehäuse verschoben ist.

### Detaillierte Beschreibung von Ausführungsformen

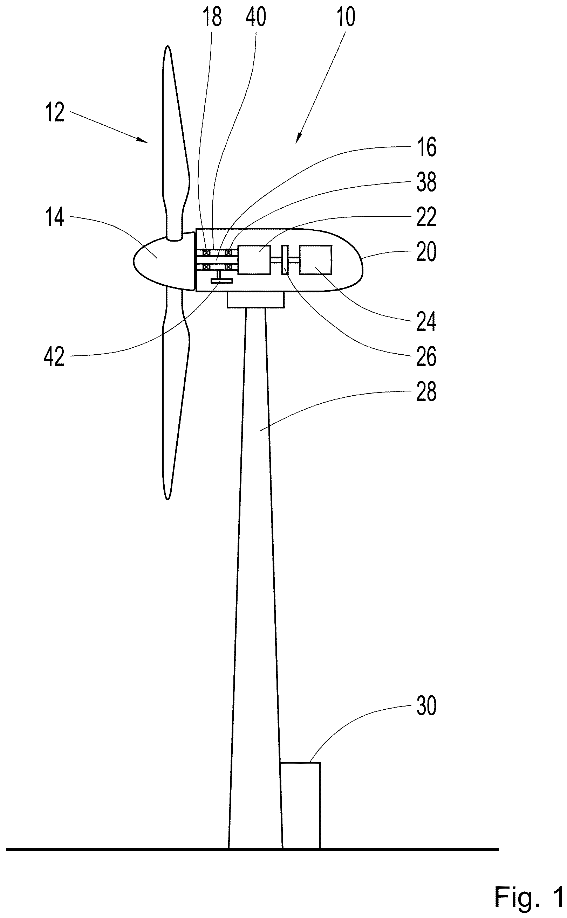

Fig. 1 veranschaulicht eine Windkraftanlage 10 mit einem Antriebsstrang in Horizontalbauweise. Die Windkraftanlage 10 weist einen Rotor 12 auf, welcher über eine Nabe 14 an einer Rotorwelle 16 gehalten ist. Die Drehachse der Rotorwelle 16 erstreckt sich im Wesentlichen horizontal. Die Rotorwelle 16 ist über zwei Wälzlager 18 in einer Gondel 20 gelagert. Dafür ist ein Rotorlagergehäuse 40 vorgesehen, welches an einem Maschinenbett 42 der Gondel 20 befestigt ist. Die Rotorwelle 16 ist über ein Getriebe 22 mechanisch mit einem Generator 24 wirkverbunden. In der Wirkverbindung zwischen Getriebe 22 und Generator 24 ist noch eine Bremse 26 angeordnet, welche auf eine Eingangswelle des Generators 24 wirkt. Die Gondel 20 ist drehbar an einem oberen Ende eines Turms 28 gelagert, welcher am Boden verankert ist. Die Windkraftanlage 10 ist in einer weiteren Ausführungsform als Off-Shore Anlage ausgebildet. Neben dem Turm 28 weist die Windkraftanlage 10 einen Netzanschluss 30 auf. Ein erstes der Lager 18 ist dem Rotor 12 zugewandt und wird auch als rotorseitiges Lager 18 bezeichnet. Ein zweites der Lager 18 ist dem Generator 24 zugewandt und wird auch als generatorseitiges Lager 18 bezeichnet. Die beiden Lager 18, sind hier als Kegelrollenlager ausgebildet. Wenigstens das Rotorlagergehäuse 40, die Rotorwelle 16, der Rotor 12, das Getriebe 22 und der Generator 24 bilden Komponenten des Antriebsstrangs der Windkraftanlage 10.

In der Darstellung von Fig. 1 ist das Getriebe 22 axial zwischen dem Rotorlagergehäuse 40 und dem Generator 24 angeordnet. Sowohl der Generator 24 als auch das Getriebe 22 sind dabei ausschließlich über das Rotorlagergehäuse 40 an dem Maschinenbett 42 befestigt. Der Generator 24 ist dabei mittelbar über das Getriebe 22 mit dem Rotorlagergehäuse 40 verbunden und damit sowohl über das Getriebe 22 als auch über das Rotorlagergehäuse 40 an dem Maschinenbett 42 befestigt. Auch der Rotor 12 ist über die Rotorwelle 16 und die Hauptlagerung ausschließlich an dem Maschinenbett 42 abgestützt. Deshalb ist es üblicherweise erforderlich, den Rotor 12 zu demontieren, sofern ein Austausch oder eine Wartung der beiden Lager 18 erfolgen soll.

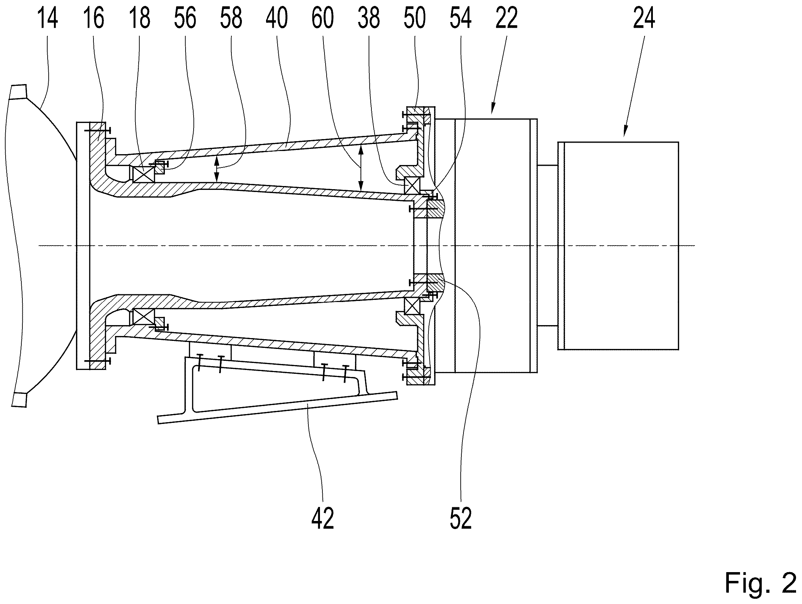

Fig. 2 veranschaulicht in einer Schnittansicht eine erste Ausführungsform eines Befestigungssystems für eine Befestigung des Antriebsstrang der Windkraftanlage 10 von Fig. 1 an der Gondel 20 der Windkraftanlage 10. Das Befestigungssystem weist das Rotorlagergehäuse 40 und die zwei Lager 18, 38 auf. Das erste Lager 18 sitzt in dem Rotorlagergehäuse 40. Das zweite Lager 38 sitzt in einem Deckel 50 und ist so in dem Rotorlagergehäuse 40 mittelbar befestigt. Der Deckel 50 verschließt eine Zugangsöffnung an einem dem Rotor 12 abgewandten Ende des Rotorlagergehäuses 40. Der Deckel 50 ist an dem Rotorlagergehäuse stirnseitig angeschraubt. Durch Lösen des Deckels 50 wird das zweite Lager 38 aus dem Rotorlagergehäuse 40 gelöst und bei Abnehmen des Deckels 50 auch automatisch aus einem Innenraum des Rotorlagergehäuses 40 entfernt. An dem Deckel 50 ist das Getriebe 22 mit seinem Gehäuse angeschraubt. Der Generator 24 ist an dem Gehäuse des Getriebes 22 mit seinem Gehäuse befestigt und so mittelbar mit dem Deckel 50 und damit dem Rotorlagergehäuse 40 verbunden. Eine Eingangswelle 52 des Getriebes 22 ist mit der Rotorwelle 16 verschraubt, sodass im Betrieb eine Antriebskraft von dem Rotor 12 in das Getriebe 22 eingeleitet werden kann. Fig. 2 zeigt einen betriebsbereiten Zustand des Befestigungssystems und damit auch der Windkraftanlage 10.

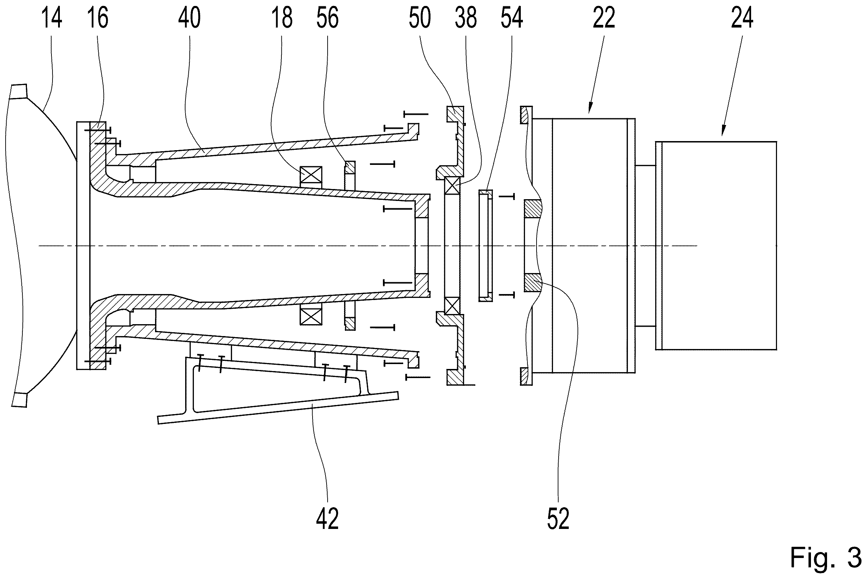

Fig. 3 veranschaulicht in einer Schnittansicht die Demontage der beiden Lager 18, 38 bei der ersten Ausführungsform des Befestigungssystems. Dabei ist keine Demontage des Rotors 12 erforderlich. Stattdessen ist das Befestigungssystem dazu ausgebildet, für eine Demontage des ersten Lagers 18 und auch des zweiten Lagers 38 die Rotorwelle 16 an einem stationären Bauteil des Befestigungssystems zu fixieren. Vorliegend bildet das Rotorlagergehäuse 40 das stationäre Bauteil. Wie in Fig. 3 zu erkennen ist, wird die Rotorwelle 16 zur Demontage der beiden Lager 18, 38 zunächst mit einer Verschraubung stirnseitig an einem rotorseitigen Endbereich mit dem Rotorlagergehäuse 40 an zwei benachbarten und radial vorstehenden Flanschen des Rotorlagergehäuses 40 und der Rotorwelle 16 verschraubt. Damit wird die Rotorwelle 16 temporär festgesetzt und die Windkraftanlage 10 ist nicht mehr betriebsbereit. Trotzdem können jeweilige Lasten, welche zuvor über die beiden Lager 18, 38 in das Rotorlagergehäuse 40 eingeleitet wurden, nun über diese Verschraubung übertragen werden. Das Rotorlagergehäuse 40 leitet diese Kräfte dann weiterhin in das Maschinenbett 42 ein.

Für die Demontage der beiden Lager 18, 38 werden zunächst das Getriebe 22 und der Generator 24 von dem übrigen Antriebsstrang gelöst. Dafür wird die Verschraubung des Gehäuses des Getriebes 22 mit dem Deckel 50 und die Verschraubung der Eingangswelle 52 mit der Rotorwelle 16 gelöst. Die Eingangswelle 52 ist in dem gezeigten Beispiel als Planetenträger eines Planetenradsatzes des Getriebes 22 ausgebildet. Die Verschraubung der Eingangswelle 52 mit der Rotorwelle 16 ist dafür von außen zugänglich. Anschließend werden das Getriebe 22 und der Generator 24 von dem Rotorlagergehäuse 40 wegbewegt, etwa mit einem in der Gondel 20 der Windkraftanlage 10 integrierten Kran oder mit temporär in der Gondel 20 installierten Schienen. Anschließend wird ein Fixierelement 54 gelöst, welches im Betrieb das zweite Lager 38 axial in Position arretiert. Das Fixierelement 54 ist hier als Klemmring ausgebildet, welcher mit der Rotorwelle 16 im betriebsbereiten Zustand verschraubt ist. Dann wird der Deckel 50 mit dem darin befindlichen zweiten Lager 38 von dem Rotorlagergehäuse 40 gelöst und axial wegbewegt, um die Zugangsöffnung an dem dem Rotor 12 abgewandten und somit getriebeseitigen Ende des Rotorlagergehäuses 40 freizugeben. Diese Zugangsöffnung ist hier als axiale Durchgangsöffnung ausgebildet. Alternativ kann auch zunächst das zweite Lager 38 allein entfernt werden und erst anschließend der Deckel 50. Die jeweiligen Teile werden hier erneut mit dem in der Gondel 20 integrierten Kran wegbewegt.

Nachdem die Zugangsöffnung freigegeben wurde, wird ein weiteres Fixierelement 56 gelöst, welches im Betrieb das erste Lager 18 axial in Position arretiert. Das weitere Fixierelement 56 ist hier als Klemmring ausgebildet, welcher mit dem Rotorlagergehäuse 40 im betriebsbereiten Zustand verschraubt ist. Anschließend kann das erste Lager 18 axial entlang der Rotorwelle 16 hin zu der Zugangsöffnung bewegt werden und dann durch die Zugangsöffnung aus dem Innenraum des Rotorlagergehäuses 40 entnommen werden. So können ein Austausch und eine Wartung des ersten Lagers 18 erfolgen, ohne dass der Rotor 12 demontiert werden muss. Eine Montage erfolgt in dem gezeigten Beispiel in umgekehrter Reihenfolge

Um das Bewegen des ersten Lagers 18 von seinem Sitz zu der Zugangsöffnung zu erleichtern, weitet sich ein radialer Freiraum zwischen der Rotorwelle 16 und dem Rotorlagergehäuses 40 in einer Axialrichtung hin zu dem von dem Rotor 12 abgewandten Ende und damit zu der Zugangsöffnung auf. Ein Abstand zwischen einem Außenumfang der Rotorwelle 16 und einem Innenumfang des Rotorlagergehäuses 40 nimmt also von dem Sitz des ersten Lagers 18 hin zu der Zugangsöffnung zu, was auch durch die zwei Pfeile 58, 60 aus Gründen der Übersichtlichkeit ausschließlich in Fig. 2 veranschaulicht ist. Der Pfeil 60, welcher näher zu der Zugangsöffnung als der Pfeil 58 ist, ist somit länger als der Pfeil 58.

In der gezeigten Ausführungsform nimmt dafür ein Außendurchmesser der Rotorwelle 16 von dem Sitz des ersten Lagers 18 hin zu der Zugangsöffnung kontinuierlich ab. In Axialrichtung hin zu der Zugangsöffnung ist die Außenwand der Rotorwelle 16 dafür mit einem konstanten Winkel radial nach innen geneigt und die Rotorwelle 16 verjüngt sich somit konisch. Zudem nimmt dafür ein Innendurchmesser des Rotorlagergehäuses 40 von dem Sitz des ersten Lagers 18 hin zu der Zugangsöffnung kontinuierlich zu und das Rotorlagergehäuse weitet sich somit konisch auf. In Axialrichtung hin zu der Zugangsöffnung ist die Innenwand des Rotorlagergehäuses 40 dafür mit einem konstanten Winkel radial nach außen geneigt. In den hier gezeigten Figuren und Ausführungsformen ist die Aufweitung des radialen Freiraums zwischen der Rotorwelle 16 und dem Rotorlagergehäuse 40 in der Axialrichtung hin zu der Zugangsöffnung zur Veranschaulichung übertrieben dargestellt. In einer tatsächlichen Realisierung kann die Zunahme wenige Millimeter oder Zentimeter betragen. Die Neigung der Innenwand des Rotorlagergehäuses 40 und der Außenwand der Rotorwelle 16 ist dann entsprechend wesentlich kleiner als hier gezeigt.

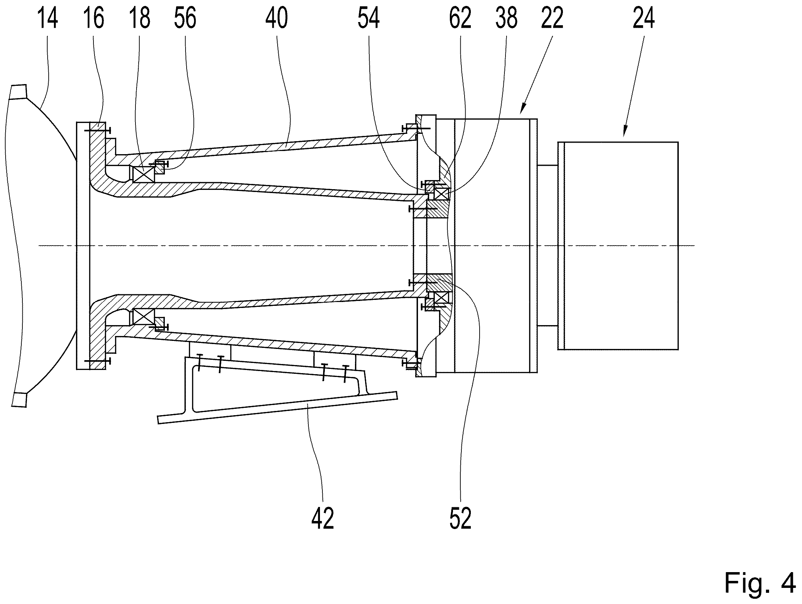

In Fig. 4 ist eine zweite Ausführungsform des Befestigungssystems gezeigt, welche ähnlich zu der ersten Ausführungsform ist. Es werden nur Unterschiede erläutert. Der Deckel 50 entfällt hier. Stattdessen ist das Gehäuse des Getriebes 22 direkt mit dem Rotorlagergehäuse 40 verschraubt und verschließt so die Zugangsöffnung. Das zweite Lager 38 sitzt zudem nicht in dem Rotorlagergehäuse 40 an dem hier nicht vorhandenen Deckel 50. Stattdessen ist das zweite Lager 38 mittels des Fixierelements 54 an einem nicht drehbaren Bauteil 62 des Getriebes 22 befestigt. Das nicht drehbare Bauteil 62 ist als Lagersitz für das zweite Lager 38 ausgebildet und an dem Gehäuse des Getriebes 22 fixiert ist. In anderen Ausführungsformen ist das nicht drehbare Bauteil 62 durch das Gehäuse gebildet. In dem zweiten Lager 38 ist nun die Eingangswelle 52 drehbar gelagert. Die Rotorwelle 16 ist somit mittelbar über die Eingangswelle 52 drehbar an dem zweiten Lager 38 gelagert.

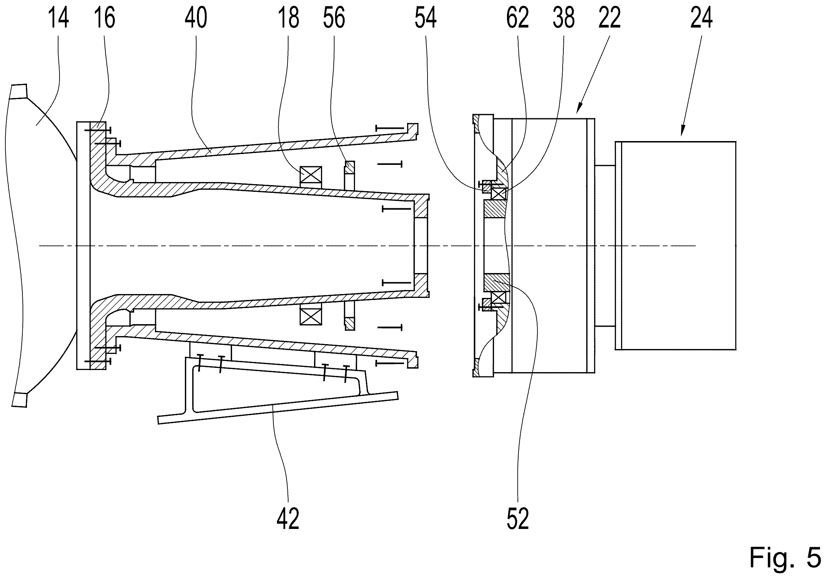

Bei der Demontage des ersten Lagers 18 wird die Zugangsöffnung in dem Rotorlagergehäuse 40 nun direkt durch Lösen des Getriebes 22 und dessen Wegbewegen freigegeben, wie in Fig. 5 gezeigt. Das zweite Lager 38 kann dabei in dem Getriebe 22 befestigt verbleiben und das Fixierelement 54 muss nicht gelöst werden. Die Eingangswelle 52 ist so weiterhin gelagert, womit das Getriebe 22 weiter in einem betriebsbereiten Zustand ist. Dadurch wird ein Testen des Getriebes 22 und auch des Generators 24 im gelösten Zustand ermöglicht. Zudem ist keine Sicherung der Eingangswelle 52 für einen Transport erforderlich und das Getriebe 22 kann weiter abgedichtet sein. Bei der Demontage des ersten Lagers 18 sind bei der zweiten Ausführungsform zudem weniger Verschraubungen zu lösen und weniger Teile zu handhaben. Bei der Demontage des ersten Lagers 18 bei der ersten Ausführungsform können dagegen jeweilige zu handhabende Teile ein geringeres Gewicht aufweisen. Zudem können die beiden Lager 18, 38 einfacher und präziser koaxial aufeinander ausgerichtet werden.

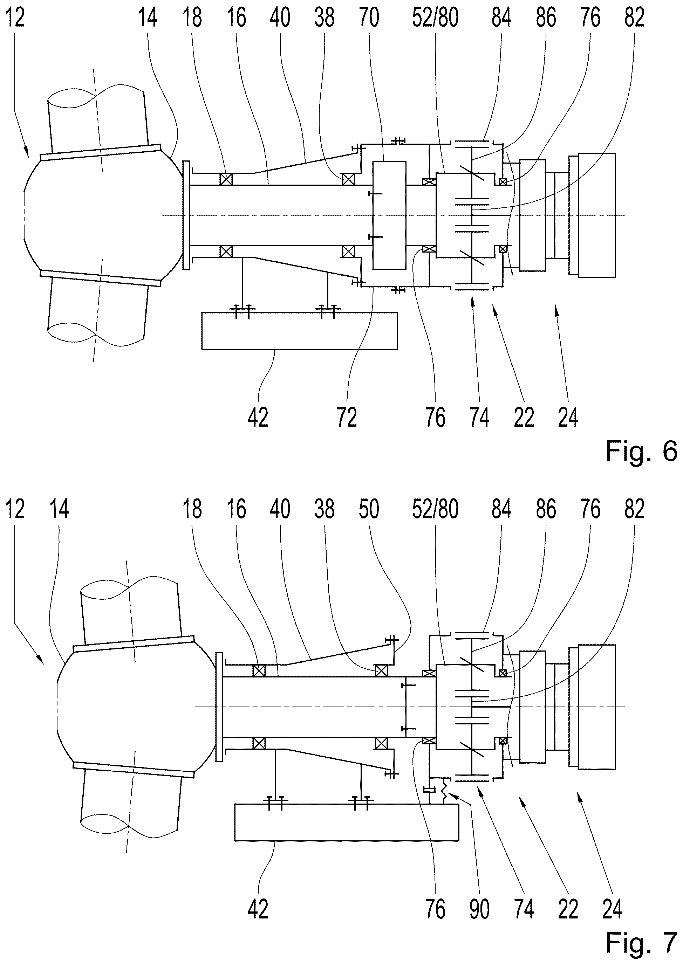

In Fig. 6 ist eine dritte Ausführungsform des Befestigungssystems in einem betriebsbereiten Zustand der Windkraftanlage 10 gezeigt, welche eine Abwandlung der ersten Ausführungsform ist. Es werden nur Unterschiede beschrieben. Der Antriebsstrang weist nun ein elastisches Verbindungselement 70 auf, mittels welchem die Rotorwelle 16 mit der Eingangswelle 52 des Getriebes 22 verbunden ist. Die Eingangswelle 52 ist also nicht mehr direkt steif mit der Rotorwelle 16 verschraubt. Radial außen zu dem Verbindungselement 70 ist ein Gehäuseelement 72 angeordnet, in welchem das Verbindungselement 70 aufgenommen ist. Das Gehäuseelement 72 verschließt die Zugangsöffnung des Rotorlagergehäuses 40 wie der Deckel 50 in der ersten Ausführungsform. An dem Gehäuseelement 72 ist das zweite Lager 38 befestigt, ähnlich wie bei dem Deckel 50 in der ersten Ausführungsform. Über das Gehäuseelement 70 ist das Gehäuse des Getriebes 22 drehfest mit dem Rotorlagergehäuse 40 durch entsprechende Verschraubungen verbunden.

In der Fig. 6 ist zudem der Planetenradsatz 74 des Getriebes 22 dargestellt. Die Eingangswelle 52 wird durch den Planetenträger 80 gebildet, welcher zusätzlich durch zwei Wälzlager 76 des Getriebes 22 an dem Gehäuse des Getriebes 22 drehbar gelagert ist. Aufgrund des elastischen Verbindungselements 70 ist die Lagerung dabei nicht überbestimmt. Der Planetenradsatz 74 weist zudem ein Sonnenrad 82 und ein Hohlrad 84 auf. Das Hohlrad 84 ist an dem Gehäuse des Getriebes befestigt. Das Sonnenrad 82 bildet die Ausgangswelle des Getriebes 22, welche an einem Läufer des Generators 24 befestigt ist. An dem Planetenträger 80 sind mehrere Planetenräder 86 drehbar gelagert. Die Planetenräder 86 kämmen jeweils mit dem Hohlrad 84 und dem Sonnenrad 82. In anderen Ausführungsformen weist das Getriebe 22 weitere Planetenradsätze auf.

Bei der Ausführungsform von Fig. 6 verjüngt sich der Außendurchmesser der Rotorwelle 16 von dem Sitz des ersten Lagers 18 zu der Zugangsöffnung nicht. Stattdessen weist die Rotorwelle 16 einen konstanten Außendurchmesser auf. Der radiale Freiraum zwischen der Rotorwelle 16 und dem Rotorwellengehäuse 40 weitet sich aber aufgrund der Aufweitung des Innendurchmessers des Rotorwellengehäuses 40 trotzdem hin zu der Zugangsöffnung auf.

Die Demontage des ersten Lagers 18 erfolgt bei der dritten Ausführungsform der Befestigungsanordnung analog zu der ersten Ausführungsform, was für die erste Ausführungsform in Fig. 3 veranschaulicht ist. Hierbei wird das Gehäuseelement 72 statt dem Deckel 50 gelöst, um die Zugangsöffnung in dem Rotorlagergehäuse 40 freizugeben. Zum Lösen des Getriebes 22 wird das Verbindungselement 70 gelöst, welches an der Eingangswelle 52 des Getriebes 22 verbleiben kann.

In Fig. 7 ist eine vierte Ausführungsform des Befestigungssystems in einem betriebsbereiten Zustand der Windkraftanlage 10 gezeigt, welche eine Abwandlung der ersten Ausführungsform ist. Gezeigt ist zudem der innere Aufbau des Getriebes 22, welcher wie bei der dritten Ausführungsform von Fig. 6 gestaltet ist. Die Rotorwelle 16 ist ebenfalls wie bei der dritten Ausführungsform und damit mit konstantem Außendurchmesser ausgebildet. Es werden nur weitere Unterschiede erläutert.

Bei der vierten Ausführungsform ist das Getriebe 22 nicht über das Rotorlagergehäuse 40 an dem Maschinenbett befestigt. Stattdessen ist das Gehäuse des Getriebes 22 direkt über Buchsenelemente 90 aus Gummi an dem Maschinenbett 42 befestigt. Aufgrund der elastischen Abstützung des Getriebes 22 durch die Buchsenelemente 90 an dem Maschinenbett 42 ist die Lagerung hier ebenfalls nicht überbestimmt, obwohl die Eingangswelle 52 des Getriebes 22 direkt durch eine Verschraubung steif an der Rotorwelle 16 befestigt ist.

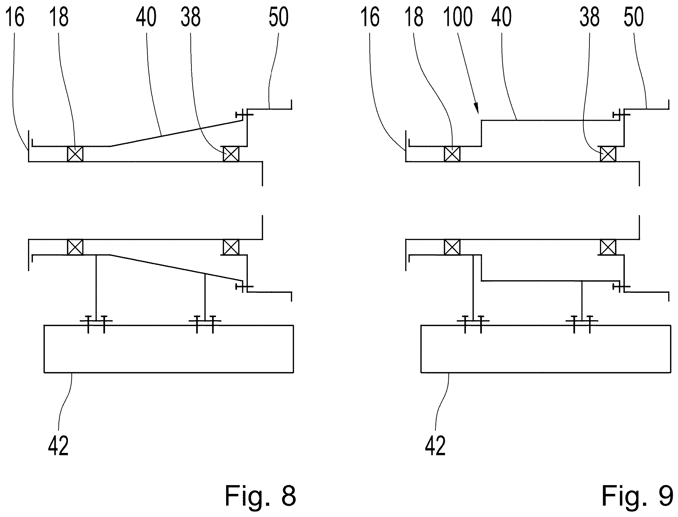

In Fig. 8 ist eine erste Variante des Rotorlagergehäuses 40 gezeigt, bei welcher sich der radiale Freiraum zwischen der Rotorwelle 16 und dem Rotorlagergehäuses 40 in der Axialrichtung hin zu der Zugangsöffnung aufweitet, weil der Innendurchmesser des Rotorlagergehäuses durch eine Neigung der Wand radial nach außen in diese Richtung zunimmt. Dies entspricht der in den zuvor beschriebenen Ausführungsformen gezeigten Gestaltung. In Fig. 9 ist eine zweite Variante des Rotorlagergehäuses 40 gezeigt, bei welcher sich der radiale Freiraum zwischen der Rotorwelle 16 und dem Rotorlagergehäuses 40 in der Axialrichtung hin zu der Zugangsöffnung aufweitet, weil der Innendurchmesser des Rotorlagergehäuses 40 durch eine Stufe 100 axial benachbart zu dem Sitz des ersten Lagers 18 in Richtung der Zugangsöffnung einmalig zunimmt. In anderen Ausführungsformen sind mehrere solcher Stufen 100 vorgesehen. Beide Varianten der Gestaltung des Rotorlagergehäuses 40 für die Zunahme des radialen Freiraums zwischen der Rotorwelle 16 und dem Rotorlagergehäuses 40 in der Axialrichtung hin zu der Zugangsöffnung werden in weiteren Ausführungsformen mit einer beliebigen der gezeigten Ausführungsform des Befestigungssystems oder generell einer Rotorwelle 16 mit konstantem Außendurchmesser oder axial in Richtung der Zugangsöffnung abnehmenden Außendurchmesser kombiniert. Die Rotorwelle 16 weist in anderen Ausführungsformen eine Gestaltung auf, bei welcher der Außendurchmesser durch eine oder mehrere Stufen statt durch eine radiale Neigung einer Außenumfangsfläche nach innen abnimmt.

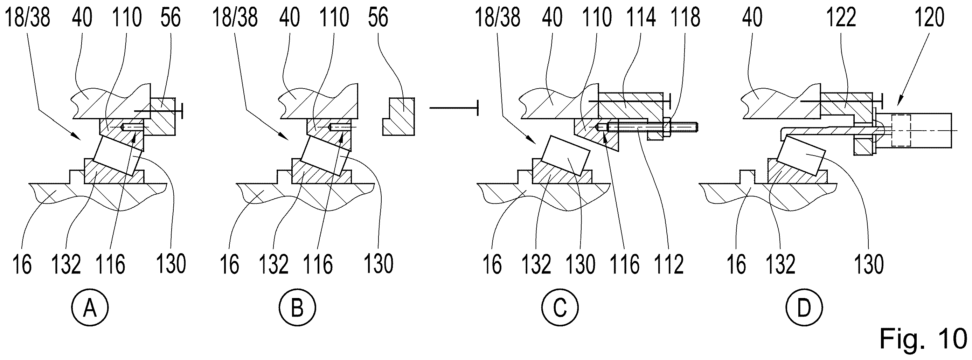

Fig. 10 veranschaulicht schematisch eine erste Variante zum Lösen eines Außenrings 110 des ersten Lagers 18 und alternativ oder zusätzlich des zweiten Lagers 38 mittels einer Schraube 112 aus dessen Sitz in dem Rotorlagergehäuse 40 oder einem anderen Bauteil bei den verschiedenen Ausführungsformen des Befestigungssystems. Der Außenring 110 ist mit einem Fixierelement, wie beispielsweise dem Fixierelement 56, axial fixiert. Dies ist in Fig. 10 in dem Teilbild A gezeigt. Dieses Fixierelement 56 ist mit dem Bauteil, welches den Sitz bildet, verschraubt und wird zum Lösen des Außenrings 110 entfernt. Dies ist in Fig. 10 in dem Teilbild B gezeigt. Anschließend wird ungefähr an dessen Position ein Widerlagerelement 114 angeordnet und an dem Bauteil, welches den Sitz bildet, durch eine Verschraubung befestigt. Dies ist in Fig. 10 in dem Teilbild C gezeigt. In dem Widerlagerelement 114 ist eine Durchgangsöffnung gebildet, welche koaxial zu einer Sacklochbohrung 116 ausgerichtet. Die Schraube 112 wird durch die Durchgangsöffnung in dem Widerlagerelement 114 geführt und mit der Sacklochbohrung 116 mit dem Außenring 110 verschraubt. Durch Drehen einer Mutter 118 auf der Schraube 112 wird die Schraube 112 axial durch die Durchgangsöffnung in dem Widerlagerelement 114 zurückgezogen. Dabei wird auch der Außenring 110 axial in Richtung der Zugangsöffnung gezogen. In einer Gestaltung löst sich dabei der Außenring 110 von dem übrigen Lager. Dies ist in Fig. 10 in dem Teilbild C gezeigt. In einer anderen Gestaltung wird dabei das gesamte Lager axial in Richtung der Zugangsöffnung gezogen.

In Teilbild D von Fig. 10 ist noch eine Zugvorrichtung 120 gezeigt, welche mit einem weiteren Widerlagerelement 122 an dem Bauteil, welches den Sitz bildet, durch eine Verschraubung befestigt ist. Die Zugvorrichtung 120 weist einen Aktuator 124 und ein Hakenelement 126 auf, welches an einem oder mehreren Wälzkörpern 130 des Lagers eingreift und so die Wälzköper 130 und einen Innenring 132 des Lagers axial in Richtung der Zugangsöffnung ziehen kann. Dadurch wird auch der Innenring 132 von seinem Sitz gelöst. Dies ist in Teilbild D ebenfalls veranschaulicht.

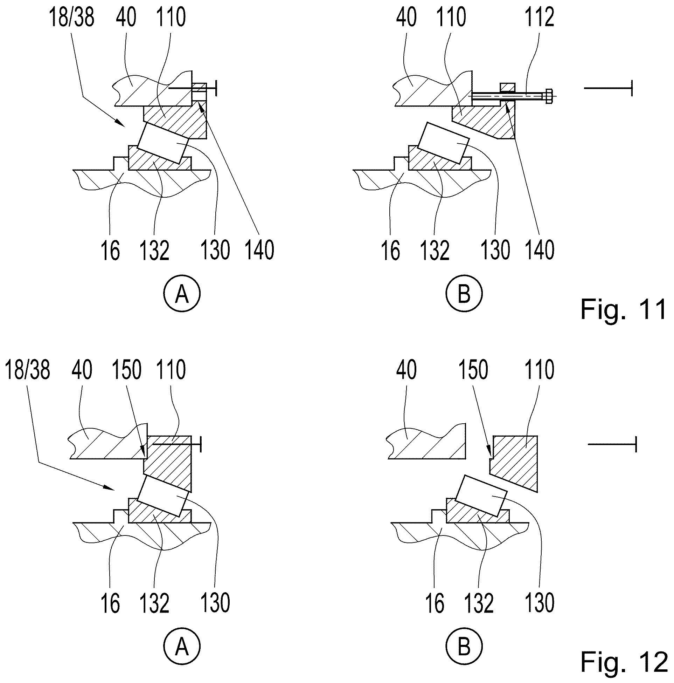

Fig. 11 zeigt schematisch eine zweite Variante zum Lösen des Außenrings 110 des ersten Lagers 18 und alternativ oder zusätzlich des zweiten Lagers 38 mittels der Schraube 112 aus dessen Sitz in dem Rotorlagergehäuse 40 oder einem anderen Bauteil bei den verschiedenen Ausführungsformen des Befestigungssystems gezeigt. Der Außenring 110 ist dabei anders gestaltet und erstreckt sich teilweise radial entlang einer Stirnseite des Bauteils, welches den Sitz für den Außenring 110 ausbildet. Dieser Teil des Außenrings 110 weist eine Durchgangsöffnung 140 mit Innengewinde auf. Zudem ist dieser Teil des Außenrings 110 zur Befestigung an dem Bauteil, welches den Sitz für den Außenring 110 ausbildet, stirnseitig verschraubt. Zum Lösen des Außenrings 110 aus dessen Sitz wird zunächst diese Verschraubung gelöst. Anschließend wird die Schraube 112 in die Durchgangsöffnung 140 eingeschraubt. Dabei stützt sich die Schraube 112 an der Stirnseite des Bauteils, welches den Sitz für den Außenring 110 ausbildet, ab und drückt den Außenring 110 so axial in Richtung der Zugangsöffnung. Dies ist in Teilbild B von Fig. 11 gezeigt. In Teilbild A von Fig. 11 ist der Außenring 110 dagegen befestigt an seinem Sitz gezeigt.

In Fig. 12 ist eine weitere Gestaltung des Sitzes des Außenrings 110 des Lagers in einem Bauteil, wie dem Rotorlagergehäuse 40, bei den verschiedenen Ausführungsformen des Befestigungssystems gezeigt. Der Außenring 110 ist zur axialen Fixierung hier ebenfalls mit einer Stirnseite des Bauteils, welches den Sitz für den Außenring 110 ausbildet, verschraubt. Dies ist in Teilbild A von Fig. 12 veranschaulicht. Der Außenring 110 weist nur eine geringe axiale Erstreckung eines Bereichs 150 seiner außen umlaufenden Wand auf, welche radial außen in dem Sitz in dem Bauteil anliegt. Zum Lösen des Außenrings 110 wird die Verschraubung gelöst. Aufgrund der geringen axialen Erstreckung des Bereichs 150 der außen umlaufenden Wand, welche radial außen in dem Sitz in dem Bauteil anliegt, kann der Außenring 110 dann mit geringem Krafteinsatz gelöst werden. Dies ist in Teilbild B von Fig. 12 veranschaulicht.

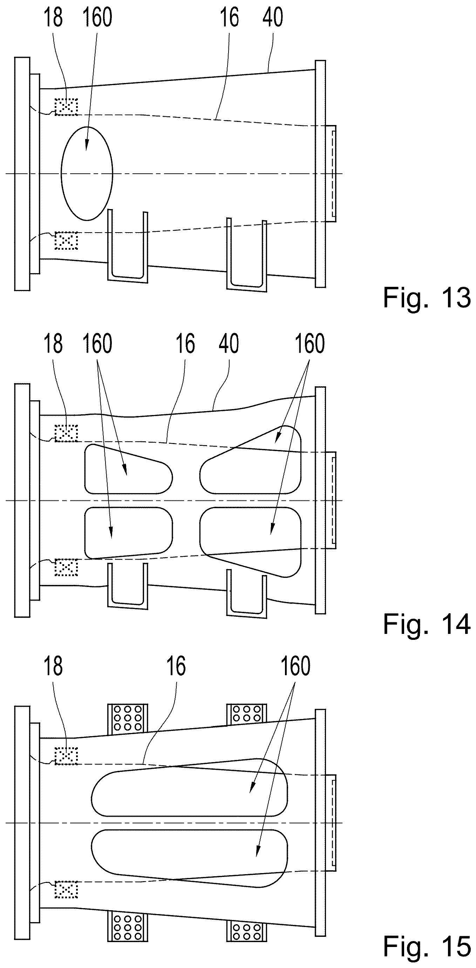

Fig. 13 veranschaulicht schematisch in einer Seitenansicht eine erste Gestaltung des Rotorlagergehäuse 40, welche wenigstens eine Durchgangsöffnung 160 in einer umlaufenden Wand aufweist. Dadurch ist der Innenraum des Rotorlagergehäuses 40 auch im betriebsbereiten Zustand der Windkraftanlage 10 zugänglich. Durch die sich radial erstreckende Durchgangsöffnung 160 kann beispielsweise das erste Lager 18 gelöst werden, wie zuvor beschrieben. Zudem kann damit ein Schlitten 200 montiert werden, welcher noch im Folgenden beschrieben wird. Die Durchgangsöffnung 160 ist in dem in Fig. 13 gezeigten Beispiel oval ausgebildet und an einem rotorseitigen Endbereich angeordnet. Das gezeigte Beispiel weist zwei koaxiale Durchgangsöffnungen 160 an gegenüberliegenden Seiten auf, welche im Wesentlichen in eine horizontale Richtung weisen. Das Rotorlagergehäuse 40 kann aufgrund der ovalen Form und geringen Größe und Anzahl von Durchgangsöffnungen hohen Lasten widerstehen. In noch einer Ausführungsform weist das Rotorlagergehäuse 40 noch unterseitig und alternativ oder zusätzlich oberseitig solche Durchgangsöffnungen 140 auf.

Fig. 14 veranschaulicht schematisch in einer Seitenansicht eine zweite Gestaltung des Rotorlagergehäuses 40, welche wenigstens eine Durchgangsöffnung 160 in einer umlaufenden Wand aufweist. Bei dieser Gestaltung sind jeweils zwei Durchgangsöffnungen 160 in Hochrichtung nebeneinander jeweils in dem rotorseitigen Endbereich und dem generatorseitigen Endbereich erkennbar. Der generatorseitige Endbereich ist im Bereich der Zugangsöffnung angeordnet. Die zweite Gestaltung erlaubt auch einen einfachen Zugang zu dem zweiten Lager 38 von dem Innenraum des Rotorlagergehäuses 40 aus. Das gezeigte Beispiel weist zu den gezeigten Durchgangsöffnungen 160 koaxiale Durchgangsöffnungen 160 an einer gegenüberliegenden Seite auf, welche im Wesentlichen in eine horizontale Richtung weisen. In noch einer Ausführungsform weist das Rotorlagergehäuse 40 noch unterseitig und alternativ oder zusätzlich oberseitig solche Durchgangsöffnungen 140 auf.

Fig. 15 veranschaulicht schematisch in einer Draufsicht eine dritte Gestaltung des Rotorlagergehäuses 40, welche wenigstens eine Durchgangsöffnung 160 in einer umlaufenden Wand aufweist. Bei dieser Gestaltung sind jeweils zwei Durchgangsöffnungen 160 in Querrichtung nebeneinander vorgesehen. Diese Durchgangsöffnungen 160 erstrecken sich bei der dritten Gestaltung von dem rotorseitigen Endbereich bis zu dem generatorseitigen Endbereich. Die dritte Gestaltung erlaubt eine einfache Handhabung des ersten Lagers 18 von außen durch die umlaufende Wand des Rotorlagergehäuses 40 hindurch, wenn das erste Lager 18 zu der Zugangsöffnung zur Entnahme aus dem Rotorlagergehäuse 40 bei der Demontage bewegt wird.

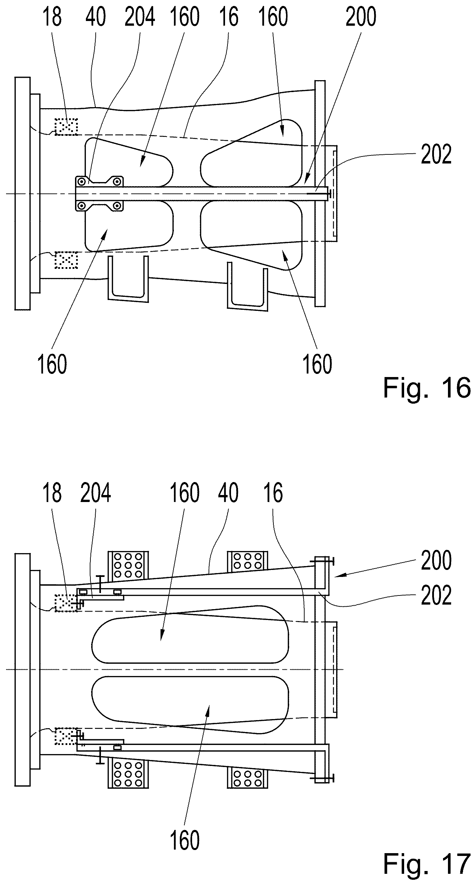

In noch weiteren Ausführungsformen sind die unterschiedlichen Gestaltungen der Durchgangsöffnungen 160 kombiniert. Beispielsweise werden die Durchgangsöffnungen 160 der dritten Gestaltung gemäß Fig. 15 oberseitig vorgesehen und seitlich die Durchgangsöffnungen 160 der zweiten Gestaltung gemäß Fig. 14. Eine solche Gestaltung ist in den Figs. 16 bis 18 gezeigt.

In den Fig. 16 bis 18 ist der Schlitten 200 veranschaulicht, welcher in dem Rotorlagergehäuse 40 befestigt ist. Der Schlitten 200 wird in einer Ausführungsform nach dem Freigegen der Zugangsöffnung des Rotorlagergehäuses 40 befestigt. Mittels des Schlittens 200 ist das erste Lager bei der Demontage aus dem Rotorlagergehäuse 40 führbar. Der Schlitten weist eine Führungsschiene 202 auf, welche im Bereich der Zugangsöffnung außenseitig mit einer Stirnseite des Rotorlagegehäuses 40 verschraubt ist. Dabei können in einer Ausführungsform Schraublöcher genutzt werden, mit welchen dort im betriebsbereiten Zustand andere Bauteile, wie der Deckel 50, befestigt sind. Zudem ist die Führungsschiene mit einem Endbereich axial benachbart zu dem Sitz des ersten Lagers 18 mit dem Rotorlagergehäuse 40 verschraubt. Diese Verschraubung erstreckt sich radial durch die Wand des Rotorlagergehäuses 40. An der Führungsschiene 202 ist ein Wagen 204 axial verschiebbar gelagert, hier mittels Rollen. Das erste Lager 18 wird an dem Wagen 204 zu dessen Demontage befestigt. Der Schlitten 200 kann das erste Lager 18 bei der Demontage aus dem Rotorlagergehäuse 40 führen. Die Befestigung mittels einer Verschraubung ist in Fig. 17 gezeigt.

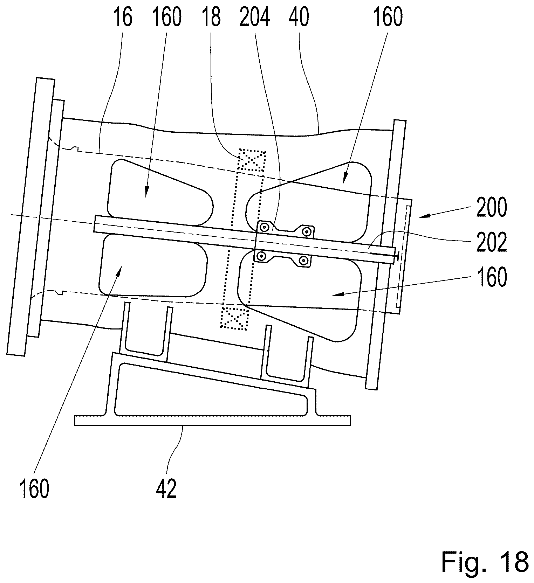

In Fig. 18 ist gezeigt, wie das erste Lager 18 geführt von dem Wagen 204 gehalten in Richtung der Zugangsöffnung verlagert wurde. Die Drehachse der Rotorwelle 16 und damit auch die Ausrichtung der Führungsschiene 202 ist dabei zu einer Horizontalen geneigt. Entsprechend zieht die Schwerkraft das erste Lager 18 in Richtung der Zugangsöffnung. Die Bewegung wird hier durch eine Bremse und alternativ oder zusätzlich einen Aktuator kontrolliert. Vorliegend ist der Wagen 204 dazu mit dem nicht dargestellten in der Gondel 20 integriertem Kran der Windkraftanlage 10 verbunden, sodass keine zusätzlichen Antriebe erforderlich sind.

### Bezugszeichen

- 10: Windkraftanlage
- 12: Rotor
- 14: Nabe
- 16: Rotorwelle
- 18: erstes Wälzlager
- 20: Gondel
- 22: Getriebe
- 24: Generator
- 26: Bremse
- 28: Turm
- 30: Netzanschluss
- 38: zweites Wälzlager
- 40: Rotorlagergehäuse
- 42: Maschinenbett
- 50: Deckel
- 52: Eingangswelle
- 54: Fixierelement
- 56: weiteres Fixierelement
- 58: Pfeil
- 60: Pfeil
- 62: nicht drehbares Bauteil
- 70: elastisches Verbindungselement
- 72: Gehäuseelement
- 74: Planetenradsatz
- 76: Wälzlager
- 80: Planetenträger
- 82: Sonnenrad
- 84: Hohlrad
- 86: Planetenräder
- 90: Buchsenelement
- 100: Stufe
- 110: Außenring
- 112: Schraube
- 114: Widerlagerelement
- 116: Sacklochbohrung
- 118: Mutter
- 120: Zugvorrichtung
- 122: weiteres Widerlagerelement
- 124: Aktuator
- 126: Hakenelement
- 130: Wälzkörper
- 132: Innenring
- 140: Durchgangsöffnung
- 150: Bereich
- 160: Durchgangsöffnung
- 200: Schlitten
- 202: Führungsschiene
- 204: Wagen

## Patentansprüche

1. Befestigungssystem für einen Antriebsstrang einer Windkraftanlage (10) an einer Gondel (20) der Windkraftanlage (10), wobei das Befestigungssystem ein Rotorlagergehäuse (40), ein stationäres Bauteil und ein erstes Lager (18) aufweist, wobei in dem Rotorlagergehäuse (40) das erste Lager (18) zum drehbaren Lagern einer Rotorwelle (16) des Antriebsstrangs befestigt ist, wobei das Rotorlagergehäuse (40) zum Befestigen an einem Maschinenbett (42) der Gondel (20) ausgebildet ist, und wobei das Befestigungssystem dazu ausgebildet ist, dass für eine Demontage des ersten Lagers (18) die Rotorwelle (16) an dem stationären Bauteil fixierbar ist.

2. Befestigungssystem nach Anspruch 1, **dadurch gekennzeichnet, dass** das stationäre Bauteil durch das Rotorlagergehäuse (40) gebildet ist.

3. Befestigungssystem nach Anspruch 1 oder 2, **dadurch gekennzeichnet, dass** das Rotorlagergehäuse (40) eine Zugangsöffnung an einem einem Rotor (12) der Windkraftanlage (10) abgewandten Ende aufweist, durch welche das erste Lager bei der Demontage entnehmbar ist.

4. Befestigungssystem nach Anspruch 3, **dadurch gekennzeichnet, dass** das Befestigungssystem ein zweites Lager (38) aufweist, welches ebenfalls durch die Zugangsöffnung zu dessen Demontage entnehmbar ist.

5. Befestigungssystem nach einem der vorhergehenden Ansprüche, **dadurch gekennzeichnet, dass** sich ein radialer Freiraum zwischen der Rotorwelle (16) und dem Rotorlagergehäuse (40) in einer Axialrichtung hin zu dem von dem Rotor (12) abgewandten Ende aufweitet.

6. Befestigungssystem nach einem der vorhergehenden Ansprüche, **dadurch gekennzeichnet, dass** das Befestigungssystem einen Schlitten (200) aufweist, welcher in dem Rotorlagergehäuse (40) befestigbar ist und mittels welchem das erste Lager (18) bei der Demontage aus dem Rotorlagergehäuse (40) führbar ist.

7. Befestigungssystem nach einem der vorhergehenden Ansprüche, **dadurch gekennzeichnet, dass** das Befestigungssystem dafür ausgebildet ist, einen Außenring (110) des ersten Lagers (18) mittels einer Schraube aus dessen Sitz in dem Rotorlagergehäuse (40) zu lösen.

8. Befestigungssystem nach einem der vorhergehenden Ansprüche, **dadurch gekennzeichnet, dass** das Rotorlagergehäuse (40) wenigstens eine Durchgangsöffnung (160) in einer umlaufenden Wand aufweist, durch welche das erste Lager (18) für die Demontage zugänglich ist.

9. Windkraftanlage (10) mit einer Gondel (20), welche ein Maschinenbett (42) aufweist, mit einer Rotorwelle (16) und mit einem Befestigungssystem nach einem der vorhergehenden Ansprüche, wobei das Rotorlagergehäuse (40) an dem Maschinenbett (42) befestigt ist, die Rotorwelle (16) in dem Rotorlagergehäuse (40) mit dem ersten Lager (18) drehbar gelagert ist und wobei die Rotorwelle (16) an einem stationären Bauteil für die Demontage des ersten Lagers (18) fixierbar ist.

10. Verfahren zur Demontage eines ersten Lagers (18) von einem Rotorlagergehäuse (40) einer Windkraftanlage (10), wobei das Rotorlagergehäuse (40) an einem Maschinenbett (42) in einer Gondel (20) der Windkraftanlage (10) befestigt ist, wobei das erste Lager (18) in dem Rotorlagergehäuse (40) befestigt ist, und wobei eine Rotorwelle (16) der Windkraftanlage (10) mit dem ersten Lager (18) drehbar an dem Rotorlagergehäuse (40) gelagert ist, wobei das Verfahren wenigstens die folgenden Schritte aufweist:
- Fixieren der Rotorwelle (16) an einem stationären Bauteil;
- Lösen der Befestigung des ersten Lagers (18) nach der Fixierung der Rotorwelle (16).
